# EUROPÄISCHE PATENTSCHRIFT

(11) **EP 2 522 545 B1**
(45) Veröffentlichungstag und Bekanntmachung des Hinweises auf die Patenterteilung: **01.01.2014**
(21) Anmeldenummer: 12001701.7
(22) Anmeldetag: 13.03.2012
(51) Int. Cl.: B60P 1/00, B60P 1/36

(54) **Laderaum eines Fahrzeugs, insbesondere eines Transportwagens, Laderaumvorrichtung und ein Transportwagen**
Storage area of a vehicle, in particular a transport cart, storage area device and a transport cart
Espace de chargement pour véhicule, notamment d'un véhicule de transport, dispositif d'espace de chargement et un véhicule de transport

(30) Priorität: 12.05.2011 DE 202011100592 U
(43) Veröffentlichungstag der Anmeldung: 14.11.2012
(73) Patentinhaber: KOMPTECH GmbH, 8130 Frohnleiten (AT)
(72) Erfinder:
(74) Vertreter: Laufhütte, Dieter

(56) Entgegenhaltungen:
- DE-U1-202007 015 652
- FR-A1- 2 342 866
- GB-A- 814 714
- GB-A- 909 554
- NL-C- 90 271
- US-A- 2 027 278

## Beschreibung

Die vorliegende Erfindung betrifft eine Laderaum mit einen Laderaumvorrichtung für den Laderaum eines Fahrzeugs, insbesondere eines Transportwagens nach dem Oberbegriff des Anspruchs 1, und einen Transportwagen mit einem Laderaum nach dem Oberbegriff des Anspruchs 13.

Bei dem Fahrzeug kann es sich beispielsweise um einen Transportwagen für landwirtschaftliche Erntegüter, insbesondere um einen Silagewagen, oder aber auch um ein Müllfahrzeug handeln. Der Laderaum kann dabei auf dem selbstfahrenden Fahrzeug aufgebaut, oder Bestandteil eines Anhängers, der an ein Zugfahrzeug angehängt wird, sein.

Um eine schnelle und vollständige Entleerung des Laderaumes zu ermöglichen, ohne den Laderaum oder das Transportfahrzeug insgesamt hochkippen zu müssen, ist es bereits bekannt, im Laderaum einen mittels eines Antriebsmotors bewegbaren Schild anzuordnen. Bei einer dadurch initiierten Bewegung des Schildes von einer Ruheposition im geladenen Zustand in Richtung der Entleerungsöffnung bzw. der Entladeseite wird der im Laderaum befindliche Inhalt auf die Entladeseite zubewegt und der Laderaum auf diese Weise entleert. Nach der Entleerung des Laderaumes wird der Schild wieder in die Ruheposition zurückbewegt, damit der Laderaum erneut befüllt werden kann.

Diese bekannte Laderaumvorrichtungen weisen jedoch den Nachteil auf, dass sie einerseits konstruktiv- und kostenaufwendig sind, und andererseits, dass sie übermäßig viel Platz im Laderaum wegen des erforderlichen Bauraumes für den Antriebsmotor sowie für die Hebelgestänge erfordern, so dass der Ladeplatz für den Ladegut verloren geht.

Aus der DE 202 07 883 U1 ist eine Laderaumvorrichtung sowie einen Abschiebewagen bekannt, bei dem die Stirnwand mittels eines Hydraulikzylinders bzw. einer Hydraulikzylinderanordnung bewegt wird. Solche Systeme haben den Nachteil, dass sie einerseits ein sehr hohes Ölvolumen vom Schlepper, mit welchem der Abschiebewagen üblicherweise gezogen wird, aufnehmen, welches von den meisten Schlepperhydrauliksystemen jedoch nicht zur Verfügung gestellt werden kann, und andererseits, dass sie eine gleichmäßige Abschiebegeschwindigkeit schwer realisierbar machen. Zudem sind die notwendigen Zylinderanordnungen konstruktiv aufwendig und entsprechend teuer.

Aus der FR 2 342 866 A1 ist ein Laderaum eines Fahrzeugs, insbesondere eines Transportwagens, bekannt, welcher Seitenwände und einen im Wesentlichen flachen Boden sowie eine Entladeseite zum Entladen eines Ladeguts und eine der Entladeseite gegenüberliegende Stirnwand aufweist, wobei die Stirnwand entlang einer Längsachse des Laderaumes zur Vorverdichtung und/oder Entladung des Ladeguts bewegbar und über umlaufende Zugmittel antreibbar ist. Quer zur Längsrichtung des Laderaumes ist eine Mehrzahl von Querstegen, die mit den Zugmitteln verbindbar sind, vorgesehen. Die Querstege werden auf Zugmittel angebracht, wobei sie lediglich auf den Zugmitteln aufliegen und nicht mit diesen lösbar befestigt werden. Außerdem sind die Querstege derart dimensioniert, dass ihre Länge im Wesentlichen der Breite des Bodensdes Laderaumes entspricht.

Aus der GB 814 714 A ist ebenfalls ein Laderaum eines Fahrzeuges bekannt. Hier sind auch Querstege zum Abtransportieren des darauf anfallenden Gutes vorgesehen, die mit ihren Endteilen auf einem Förderband angebracht sind und nicht mit diesem lösbar befestigt. Außerdem entspricht die Länge der Querstege der Breite des Bodens des Laderaumes, so dass sie nicht zwischen dem Förderband angebracht werden können.

Aus der NL 90 271 C 16 ist eine Laderaumvorrichtung zum Be- und Entladen von Transportgut in und aus einem Laderaum, welche Querstege und Förderketten aufweist. Die Querstege weisen eine Länge auf, die im Wesentlichen der Breite des Bodens des Laderaumes entspricht. Die Förderketten werden durch in den Querstegen vorgesehene Öffnungen hindurchgeführt, so dass kein Austausch eines einzelnen Quersteg beim Bedarf stattfinden kann.

Aufgabe der vorliegenden Erfindung ist es daher ein Laderaum mit einer Laderaumvorrichtung zum Beund Entladen von Transportgut in und aus einem Laderaum eines Fahrzeugs insbesondere eines Transportwagens bereitzustellen, welche nur einen geringen Anteil des verfügbaren Laderaumes beansprucht und mit möglichst einfachen Mitteln eine schnelle und restlose Entladung ermöglicht.

Diese Aufgabe wird erfindungsgemäß durch einen Laderaum mit einer Laderaumvorrichtung für ein Fahrzeug mit den Merkmalen des Anspruchs 1 gelöst.

Die erfindungsgemäße Laderaum mit einen Laderaumvorrichtung zum Beladen und Entladen von Transportgut in und aus einem Laderaum eines Fahrzeugs, insbesondere eines Transportwagens weist lösbar mit dem Boden des Laderaums verbundene umlaufende Zugmittel auf, zum Antrieb der Stirnwand, wobei die Zugmittel erfindungsgemäß mit einer Mehrzahl von Querstegen versehen sind. Die Querstege erstrecken sich quer zur Laderaumlängsrichtung hin und werden zusammen mit den Zugmitteln hin und her bewegt, wobei die Querstege zum Teil die Last des Ladeguts tragen und die Stabilität der Konstruktion der erfindungsgemäßen Vorrichtung wesentlich erhöhen. Erfindungsgemäß werden die Querstege zwischen zwei gegenüberliegenden Förderketten angebracht und lösbar mit diesen verbunden, wobei die Querstege an den Kettengliedern befestigbar sind, wobei die Länge der Querstege ein Drittel und ein Viertel der Breite des Bodens entspricht. Die Länge der Querstege

kann etwa ein Drittel oder ein Viertel der Breite des Laderaums entsprechen. Durch die lösbare Verbindung der Querstege mit den einander gegenüberliegenden Förderketten kann der Abstand zwischen den parallel zueinander angeordneten Querstegen variabel gewählt werden, wobei die Querstege auch zig-zag-artig angeordnet und mit den Förderketten verbunden werden können.

Vorzugsweise werden die Zugmittel über einen Motor, welcher ein elektrischer oder ein hydraulischer Motor sein kann, in Bewegung gebracht. Die Zugmittel weisen dabei wenigstens zwei und vorzugsweise vier parallel zueinander verlaufende endliche Förderketten auf, die paarweise parallel zueinander und in gleichen Abständen voneinander angeordnet sind. Dabei sind zwei der Förderketten außenliegend und dienen dem Antrieb der Stirnwand und die anderen zwei-innenliegend, wobei die Querstege mit diesen verbunden sind.

Die Querstege sind vorzugsweise an die miteinander korrespondierenden innenliegenden Förderketten lösbar befestigt. Dies ist besonders günstig, da damit bei Bedarf ein Austausch der Querstege ohne einen großen Aufwand möglich ist. Die Querstege können dabei an ihren Enden mit Haken versehen sein, so dass sie an die Kettenglieder eingehakt werden können.

In einer bevorzugten Ausführungsform befinden sich die Querstege in einer abgesenkten Stellung in Bezug auf die parallel zueinander verlaufenden Förderketten, wobei sie an ihren unteren Seiten wenigstens eine Stütze oder einen Stützbalken oder aber durchaus auch eine Rolle aufweisen können, was das Gleiten über den Boden des Laderaums wesentlich erleichtert und damit auch die Fortbewegungsgeschwindigkeit der Stirnwand. Außerdem wird die Stabilität der Laderaumvorrichtung durch das Abstützen der Querstege erhöht, wobei die Vorrichtung kompakt ausgebildet ist.

Die erfindungsgemäße Laderaumvorrichtung ist vorzugsweise in der Mitte des Bodens des Laderaumes angeordnet, wobei eine andere Anordnung ebenfalls möglich ist. Es können auch beispielsweise zwei Laderaumvorrichtungen auf den Laderaumboden nahe an die angrenzenden Seitenwände des Laderaums angebracht werden. Die Breite der Laderaumvorrichtung kann variabel gewählt werden und hängt von der Länge der Querstege ab, wobei diese durch die vorzugsweise lösbare Verbindung mit den Kettengliedern der Förderketten durch passenden Querstegen leicht ersetzt werden können.

Die Querstegen können auch aus verschienen Materialien hergestellt werden, wie z.B. aus rostfreiem Blech oder aber auch aus Kunststoff, wobei die Querstege auch biegsam ausgebildet sein können. Die Wahl der Materialien hängt dabei von der Beschaffenheit des zu transportierenden Ladeguts ab.

Der Laderaum eines Fahrzeugs, insbesondere eines Transportwagens, mit der erfindungsgemäßen Laderaumvorrichtung weist steile Seitenwände und einen im Wesentlichen flachen Boden sowie eine Entladeseite zum Entladen der Ladung und eine der Entladeseite gegenüberliegende Stirnwand auf, wobei die Stirnwand entlang einer Längsachse des Laderaumes zur Vorverdichtung oder Entladung des Ladeguts hin und her bewegbar ist. Die Stirnwand ist dabei über umlaufende Zugmittel antreibbar. Die erfindungsgemäßen Zugmittel sind lösbar auf dem Boden des Laderaumes und mit einer Mehrzahl von quer zur Längsrichtung angebrachten Querstegen verbunden. Mit dieser erfindungsgemäßen Maßnahme wird erreicht, dass einerseits die Stirnwand entlang des Laderaumes gleichmäßig und mit einfachen Mitteln bewegt werden kann, so dass das sich im Laderaum befindliche Ladegut bei einer Bewegung der Zugmittel in Fahrtrichtung vorverdichtet und bei einer der Fahrtrichtung entgegengesetzten Bewegung, eine vollständige Entladung des Ladeguts erreicht wird. Erfindungsgemäß sind die Zugmittel und die damit verbundenen Querstege lösbar mit dem Boden des Laderaumes verbunden, so dass die ganze Anordnung oder aber auch einzelne Teile davon leicht vor Ort ausgetauscht werden können. Je nach Bedarf können dabei aus verschiedenen Materialien angefertigten Querstege verwendet werden, so dass die erfindungsgemäße Laderaumvorrichtung an die Beschaffenheit verschiedenster Ladegüter angepasst werden kann.

Ein weiterer Vorteil des Laderaums besteht darin, dass durch den Einsatz von Zugmitteln, durch welche die Stirnwand angetrieben wird und welche mit einer Mehrzahl von Querstegen verbunden sind, so dass das Ladegut aus dem Laderaum hinausgefördert wird, eine Entlastung der Stirnwand beim Entladen des Ladeguts realisiert werden kann. Der auf die Stirnwand einwirkende Druck wird nämlich durch die sich mit dieser in dieselbe Richtung mitbewegenden Querstege minimiert. Durch die Anbringung der aus Zugmitteln und Querstegen bestehenden und sich zusammen mit der Stirnwand bewegenden Anordnung auf dem Boden des Laderaums kann das Ladegut leicht und gleichmäßig ausgeschüttet werden.

Eine vollständige und restlose Entladung wird dadurch erreicht, dass die Vorrichtung zusätzlich zu den Zugmitteln die Querstege aufweist, so dass das Ladegut auf dem Boden des Laderaumes nicht anhaftend bleibt, da bei einer Entladung die Querstege mitbewegt werden, somit wird auf eine einfache Weise eine Anstauung des Ladeguts an der Stirnwand verhindert.

Das Ladegut kann durch diese einfache und kostengünstige konstruktive Maßnahme aus dem Laderaum hinausgefördert werden, ohne dass Ladegutreste im Laderaum bleiben. Dies ist besonders günstig, wenn es sich um den Laderaum eines Transportwagens für landwirtschaftliche Erntegüter oder aber auch eines Mühlfahrzeuges handelt. Solche Laderäume sind in der Regel von oben offen, so dass eine Beladung des Ladegutes von oben erfolgen kann, jedoch ist das Ladegut den Wetterbedingungen schutzlos ausgeliefert, so dass beim nass werden Reste davon auf dem Boden des Laderaums haften bleiben können. Durch die erfindungsgemäße Anbringung einer Mehrzahl von Querstegen an die umlaufenden endlichen Zugmittel werden die Ladegutreste am Ende des Laderaums ausgeschüttet und hinausbefördert, so dass der Laderaum ohne einen großen Aufwand wieder beladungsfähig sein kann.

Als besonders vorteilhaft wird dabei angesehen, dass der Antrieb nicht mehr wie im Stand der Technik über einen Hydraulikzylinder, sondern über ein umlaufendes Zugmittel, insbesondere über wenigstens zwei parallel zueinander verlaufende Förderketten, zwischen welchen die Querstege angebracht und lösbar mit den Kettengliedern befestigt werden, erfolgt. Hierdurch können bei dem Laderaum die umlaufenden Förderketten zusammen mit den Querstegen über einen Motor in Bewegung gebracht werden, um das Ladegut hinauszufördern oder die Stirnwand in einer ursprünglichen Beladeposition zu bringen. Damit ergibt sich eine gleichmäßige Antriebsgeschwindigkeit, so dass die Stirnwand mit gleichmäßiger Geschwindigkeit hin und her bewegt werden kann. Dies ist besonders wichtig, da somit die Ladegüter gleichmäßig hinausgefördert werden können. Darüber hinaus können die Zugmittel mechanisch sehr einfach über wenigstens ein Antriebsrad, über welches eines der Zugmittel läuft, angetrieben werden, was zu einer Vereinfachung der Konstruktion führt.

Des Weiteren wird erfindungsgemäß der hohe konstruktive Aufwand, welcher zur Stabilisierung von Schubsystemen zum Bewegen der Stirnwand nötig ist, vermieden, da der über Zugkraft arbeitende Antrieb für Querkräfte erheblich unempfindlicher als die Schubsysteme mit Hydraulikkolben ist.

In einer besonders vorteilhaften Ausgestaltung des Laderaums verlaufen die oben laufenden Stränge der umlaufenden Zugmittel, welche endlich ausgebildet sind, zusammen mit den damit verbundenen Querstegen oberhalb des Bodens des Laderaumes und die unten laufenden Stränge der umlaufenden Zugmittel, in einem Aufbaurahmen des Laderaumes, welcher eine flache Aufbau aufweist und auch vom Fahrgestellrahmen des Transportwagens gebildet sein kann, so dass keine aufwendige Aufnahmekonstruktion erforderlich ist.

Es wird als besonders vorteilhaft angesehen, wenn die Querstege ein im Wesentlichen U-förmiges Profil aufweisen. Sie können aber auch eine andere Form haben und beispielsweise einen rechteckförmigen oder einen trapezförmigen Querschnitt aufweisen. Die Querstege können dabei aus rostfreiem Stahl oder aber auch aus Kunststoff hergestellt werden. Vorteilhafterweise sind die Querstege derart geformt, dass ihre Unterseite, welche dem Boden des Laderaumes angrenzt, im Wesentlichen abgeflacht ausgebildet ist.

Vorzugsweise weisen die Querstege an ihrer dem Boden des Laderaumes angrenzenden Unterseite wenigstens eine Rolle oder aber auch eine Stütze oder einen Stützbalken auf, so dass über diese bzw. über diesen die Querstege über den angrenzenden Boden des Laderaumes einerseits leicht gleiten können. Andererseits ist angesichts dessen, dass die Förderketten, die durch die Querstege miteinander verbunden sind, voneinander beabstandet sind und eine Länge aufweisen, die vorzugsweise ein Drittel oder ein Viertel der Breite des Laderaumbodens entspricht, eine Abstützung der Querstege, welche die wesentliche Last des Ladeguts tragen, als besonders vorteilhaft anzusehen.

Bevorzugt werden die Förderketten über Umlenkrollen, die im Bereich der Entladeseite und der dieser gegenüberliegenden Seite des Laderaumbodens angeordnet sind, geführt. Hierdurch ergibt sich ein umlaufender Antriebsstrang, mit welchem die Stirnwand problemlos entlang der Achse des Laderaums bewegt werden kann. Durch eine Änderung der Umlaufrichtung der Zugmittel kann nach erfolgter Vorverdichtung oder Entladung des Ladeguts die Stirnwand entsprechend wieder zurück in die Ausgangsposition auf der der Entladeseite gegenüberliegenden Seite des Laderaums bewegt werden. Die Umlenkrollen sind dabei auf der Entladeseite auf einer im Bereich der Entladekante angeordneten Achse angeordnet, was besonders vorteilhaft ist, da bei einer Bewegung der Stirnseite auf die Entladeseite hin erheblich höhere Kräfte notwendig sind, um das Ladegut hinauszufördern, als beim Zurückführen der Stirnwand in eine Beladeposition.

Es wird als besonders vorteilhaft angesehen, wenn die Stirnwand die gesamte Breite und/oder Höhe des Laderaum-Querschnitts ausfüllt, so dass das zu befördernde Ladegut vollständig entladen werden kann. Dabei kann die Stirnwand an die der Seitenwände des Laderaumes angrenzenden Rände Dichtungen aufweisen.

Die Seitenwände des Laderaumes weisen in einer bevorzugten Ausführungsform des Laderaums an der Innenwand jeweils eine Führungsschiene auf, in welche die Stirnwand über korrespondierende Aussparungen eingreift und bei einer Bewegung der Stirnwand in Fahrtrichtung bzw. in Fahrtgegenrichtung über die Führungsschienen gleitet. Die Führungsschienen sind bevorzugt am unteren Ende der Seitenwände befestigt, so dass eine zusätzliche Abstützung der Stirnwand bei ihrer Bewegung entlang der Längsachse des Laderaums gewährleistet ist.

Die Stirnwand des Laderaumes weist Öffnungen zum Führen der endlichen Förderketten auf und im Bereich der Querstege ist die Stirnwand vorzugsweise mit einer Aussparung versehen, über die die Querstege hindurchgeführt werden können.

Die vorliegende Erfindung wird nun anhand eines Ausführungsbeispiels und der Zeichnung näher erläutert. Es zeigen:
- Figur 1:: eine perspektivische Darstellung eines erfindungsgemäßen Laderaums eines Transportwagens mit der erfindungsgemäßen Laderaumvorrichtung gemäß einem Ausführungsbeispiel,
- Figur 2:: ein Detail der in Figur 1 gezeigten Ansicht,
- Figur 3:: eine Draufsicht auf dem Laderaum des Transportwagens gemäß Figur 1 mit der erfindungsgemäßen Laderaumvorrichtung.

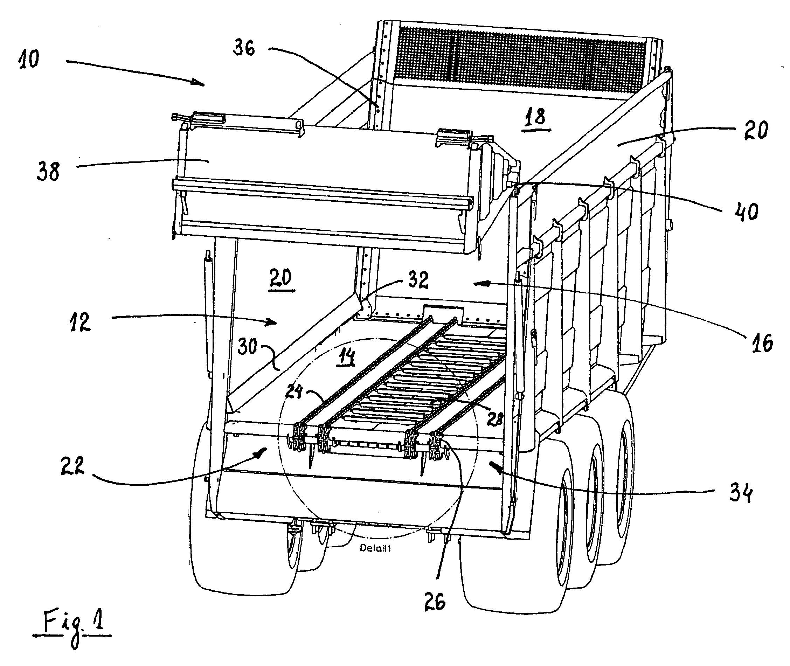

Figur 1 zeigt eines Ausführungsbeispiels eines erfindungsgemäßen Transportwagens 10 mit einer erfindungsgemäßen Laderaumvorrichtung 22. Der Transportwagen 10 weist einen Laderaum 12 auf, mit einem Boden 14, einer Entladeseite 16, auf welcher das Ladegut entladen wird, und steilen Seitenwänden 20, welche sich entlang einer Längsachse des Laderaumes 12 hin erstrecken. Die der Entladeseite 16 des Laderaums 12 gegenüberliegende Stirnwand 18 ist dabei entlang der Längsachse des Laderaums 12 bewegbar, um das im Laderaum 12 befindliche Ladegut zur Vorverdichtung und/oder Entladung auf die Entladeseite hin oder her zu bewegen. Die Stirnwand 18, welche einen der Entladeseite gegenüberliegenden Abschluss des Laderaumes 12 bildet, arbeitet dabei bei der Bewegung auf die Entladeseite 16 hin wie ein Kolben, welcher das im Laderaum 12 befindliche Ladegut vor sich herschiebt.

In der in Figur 1 gezeigten Position der Stirnwand 18 weist der Laderaum 12 ein maximales Volumen auf, so dass Ladegut von oben in den Laderaum 12 geladen werden kann. Die Bewegung der Stirnwand 18 von dieser Endposition bis einer Entladeposition erfolgt durch umlaufende Zugmittel, die in diesem Ausführungsbeispiel als parallel zueinander angeordnete Förderketten 24 ausgeführt sind, wobei erfindungsgemäß eine Mehrzahl von Querstegen 28 vorgesehen sind, welche mit den Förderketten 24 verbunden und quer zur Längsrichtung des Laderaumes 12 lösbar angebracht sind. Die Querstege 28 weisen Haken 42 auf, zum lösbaren Verbinden mit den Kettengliedern der Förderketten.

Im Bereich der Entladeseite 16 und der gegenüberliegenden Seite des Laderaums 12 sind Umlenkrollen 26 vorgesehen, über welche die Förderketten 24 geführt werden, um die Stirnwand 18 in die Entlade- bzw. Beladeposition zu bringen. Die Umlenkrollen 26 sind dabei auf der Entladeseite auf einer im Bereich einer Entladekante des Bodens 14 des Laderaums 12 angeordneten Achse angebracht.

Die Förderketten 24 werden über mindestens eine der Umlenkrollen angetrieben. Der Antrieb kann dabei auf der Entladeseite 16 erfolgen, was besonders vorteilhaft ist, da bei einer Bewegung der Stirnseite 18 auf die Entladeseite 16 hin, erheblich höhere Kräfte notwendig sind, um das Ladegut hinauszufördern, als beim Zurückführen der Stirnwand in die Beladeposition.

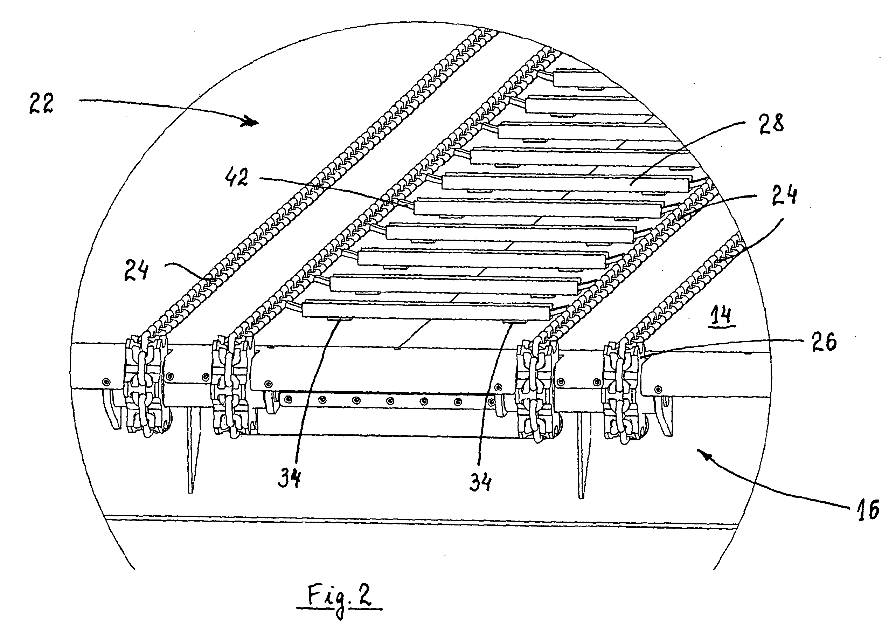

Figur 2 zeigt eine vergrößerte Darstellung der erfindungsgemäßen Laderaumvorrichtung 22 im Bereich der Entladeseite 16 des Laderaumes. Die Querstege 28 sind parallel zueinander und in regelmäßigen Abständen voneinander beabstandet, wobei sie mit den Kettengliedern zweier parallel zueinander verlaufenden Förderketten 24 verbunden sind. Die Querstege 28 weisen an ihren Enden Haken 42 auf, zum Einhaken an die Kettengliedern, auf.

In diesem Ausführungsbeispiel weisen die Querstege 28 ein U-förmiges Profil auf, wobei die Querstege 28 an ihrer flachen Unterseite zwei Stützbalken 34 aufweisen.

Dabei wird als besonders vorteilhaft angesehen, wenn die Stützbalken 34 eine im Wesentlichen glatte Oberfläche aufweisen, so dass sie leicht über den Boden 14 des Laderaumes 12 gleiten. Dadurch wird der Reibungswiderstand wesentlich minimiert.

Des Weiteren wird die Zugkraft der Förderketten 24, welche mit den Querstegen 28 miteinander verbunden sind, wesentlich erhöht, wobei durch die Querstege 28 die Stabilität der Laderaumvorrichtung 22 verbessert wird. Die Querstege 28 können aber auch so ausgebildet sein, dass sie an ihrer dem Boden 14 des Laderaumes 12 benachbarten Unterseite Rollen aufweisen, so dass die Querstege 28 über den Boden 14 des Laderaums gleiten.

Durch die in den Figuren 1 und 2 gezeigte U-förmige Ausbildung der Querstege 28 wird außerdem erreicht, dass das Ladegut nicht nur durch die Bewegung der Stirnwand 18 über die Entladeseite 16 entladen wird, sondern auch dass das Ladegut durch die Querstege 28 mitgerissen wird. Somit wird eine Verstauung des Ladeguts an der Stirnwand 18 vermieden, so dass die Drehgeschwindigkeit der Umlenkrollen 26 erhöht werden kann und damit eine schnelle und aber auch zuverlässige und regelmäßige Entladung des Ladeguts realisiert werden kann.

Die Innenseiten der Seitenwände 20 weisen, wie in Figur 1 gezeigt, in ihrem unteren Bereich jeweils eine Führungsschiene 30 auf, die in diesem Ausführungsbeispiel knapp über den Boden 14 des Laderaumes 12 verläuft und an der Seitenwand 20 befestigt ist. In der in Figur 1 gezeigten perspektivischen Darstellung ist nur die Innenseite der einen Seitenwand 20 ersichtlich. Es versteht sich aber, dass auch die gegenüberliegende Seitenwand eine solche aufweist. Die Führungsschienen 30 greifen jeweils in eine an der Rahmenkonstruktion der Stirnwand 18 ausgebildete korrespondierende Aussparung 32 ein und sichert damit die Stirnwand 18 gegen eine Bewegung nach oben und gleichzeitig gegen ein Umkippen nach hinten.

Die derart ausgebildete Führung nimmt damit die Kräfte, welche beim Verschieben des Ladeguts durch die Stirnwand 18 auf eine dem Laderaum 12 zugewandte Seite der Stirnwand 18 wirken, auf. In den Seitenbereichen sowie im Bodenbereich der Stirnwand 18 sind dabei Führungsrahmen 36 vorgesehen, welche zusätzlich mit Dichtungselementen versehen werden können, die dafür sorgen, dass das Ladegut nicht seitlich an der Stirnwand 18 vorbei in den dem Laderaum 12 abgewandten Bereich rutscht.

Wie in Figur 1 gezeigt, ist der entladeseitige Laderaumabschluß als klappbarer Deckel 38 ausgeführt, welcher an einer hinteren Oberkannte an Anlenkpunkten 40 angelenkt ist, wobei diese als Drehgelenke ausgebildet sind. Der klappbare Deckel 38 kann somit nach oben aufgeklappt werden, um den Laderaum durch ein Verschieben der Stirnwand 18 in Richtung auf die Entladeseite hin zu entleeren. Bei geschlossenem Deckel 38 kann entsprechend durch eine Bewegung der Stirnwand 18 auf die Entladeseite, d.h. auf den Deckel 38 hin, eine Vorverdichtung des Ladeguts erfolgen.

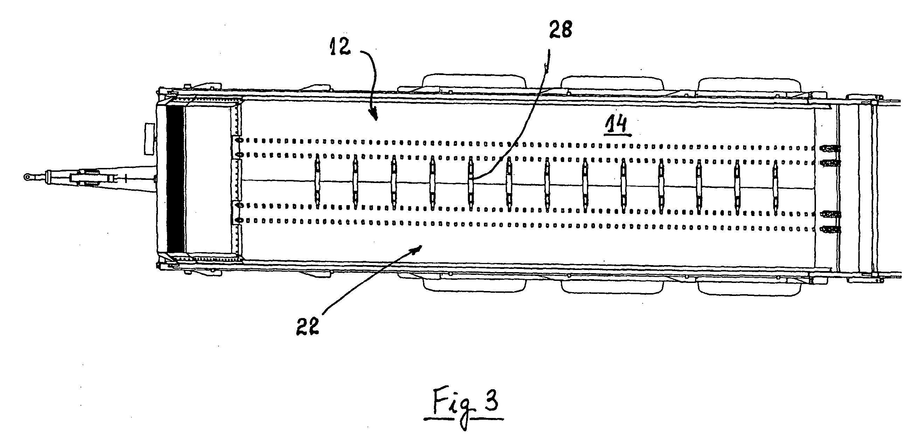

Figur 3 zeigt eine Draufsicht des Laderaums 12 des Transportwagens gemäß Figur 1 mit der erfindungsgemäßen Ladevorrichtung 22. Die Laderaumvorrichtung 22 ist dabei mittig auf den Boden 14 des Laderaumes 12 angebracht, wobei die Laderaumvorrichtung 22 derart dimensioniert ist, dass ihre Breite etwa ein Drittel der Breite des Bodens 14 entspricht und ihre Länge etwa die Länge des Bodens 14 des Laderaumes 12. Die Querstege 28 sind in diesem Ausführungsbeispiel parallel zueinander und in regelmäßigen Abständen voneinander angeordnet. Sie können aber auch abhängig vom Ladegut in unregelmäßigen Abständen zueinander angeordnet sein und auch dicht aneinander. Diese Querstege 28 sind vorzugsweise lösbar mit den Kettengliedern verbunden, so dass eine Verstellung und ein Austausch je nach Bedarf möglich ist. Dies erhöht die vielseitige Einsetzbarkeit der erfindungsgemäßen Laderaumvorrichtung.

Der erfindungsgemäße Laderaum bzw. der erfindungsgemäße Transportwagen mit der Laderaumvorrichtung kann dabei zur Aufnahme bzw. zum Transportieren insbesondere von Schüttgut, wie z.B. landwirtschaftliche Güter aber auch für Müll verwendet werden. Durch den erfindungsgemäßen Antrieb der Stirnwand über umlaufende Zugmittel, welche mit Querstegen verbunden sind, kann ein Vorverdichten bzw. Entladen des Ladeguts über die Bewegung der Stirnwand entlang der Längsachse des Laderaums auf die Entladesseite hin problemlos und auf eine einfache und kostengünstige Weise mit jeder Art von Schlepper durchgeführt werden, ohne dass der Schlepper hierzu ein besonders ausgestattetes Hydrauliksystem benötigen würde.

Zudem verlaufen die unten umlaufenden Stränge der Zugmittel im Bodenraum des Laderaums bzw. im Fahrzeugrahmen des Transportwagens, so dass sich eine besonders niedrige Bauhöhe der Bodenstruktur ergibt. Weiterhin kann über den Antrieb über die Zugmittel, welche über die Umlenkrollen angetrieben werden, ein besonders gleichmäßiges Bewegen des Ladeguts ermöglicht werden. Der Antrieb der Umlenkrollen und damit der Zugmittel, welche die Stirnwand entlang der Längsachse des Laderaums entweder auf die Entladeseite hin oder von der Entladeseite wegzieht, kann dabei über einen elektrischen oder hydraulischen Motor erfolgen.

Somit werden eine Ladevorrichtung eines Transportwagens sowie einen Laderaum bereitgestellt, die vielseitig einsetzbar sind und bei welchen eine gleichmäßige Abschiebegeschwindigkeit realisierbar ist.

## Patentansprüche

1. Laderaum mit einen Laderaumvorrichtung zum Be- und Entladen von Transportgut in und aus einem Laderaum (12) eines Fahrzeugs, insbesondere eines Transportwagens (10), wobei der Laderaum (12) steile Seitenwände (20) und einen im Wesentlichen flachen Boden (14) sowie eine Entladeöffnung zum Entladen der Ladung sowie eine Stirnwand (18) aufweist, wobei die Laderaumvorrichtung (20) lösbar mit dem Boden (14) des Laderaumes (12) verbundene umlaufende Zugmittel zum Antrieb der Stirnwand (18) aufweist, wobei die Zugmittel wenigstens zwei parallel zueinander verlaufende endliche Förderketten (24) und eine Mehrzahl von Querstegen (28), die sich quer zur Laderaumlängsrichtung hin erstrecken, aufweisen,
**dadurch gekennzeichnet, dass** die Querstege (28) zwischen zwei gegenüberliegenden Förderketten (24) anbringbar und lösbar verbindbar sind, wobei die Querstege (28) an die Kettenglieder befestigbar sind, wobei die Länge der Querstege (28) ein Drittel oder ein Viertel der Breite des Bodens (14) entspricht.

2. Laderaum nach Anspruch 1, **dadurch gekennzeichnet, dass** die Zugmittel vier parallel zueinander verlaufende paarweise angeordnete Förderketten (24), von denen zwei innenliegend und zwei außenliegend sind, aufweisen, wobei die Querstege (28) mit den innenliegenden Förderketten (24) verbindbar sind, und wobei die außenliegenden Förderketten zum Antreiben der Stirnwand (18) dienen, wobei die Zugmittel vorzugsweise über einen Motor bewegbar sind, und wobei vorteilhaft die Zugmittel in der Mitte des Bodens (14) des Laderaumes (12) angeordnet sind.

3. Laderaum nach einem der Ansprüche 1 oder 2, **dadurch gekennzeichnet, dass** die Querstege (28) in einer abgesenkten Stellung in Bezug auf die parallel verlaufenden Förderketten (24) angebracht sind, wobei die Querstege (28) an ihren unteren Seiten wenigstens einen Stützbalken oder eine Rolle aufweisen, der bzw. die über den Boden (14) des Laderaums (12) gleitet, wobei vorteilhaft die Stirnwand (18) des Laderaumes (12) Öffnungen zum Führen der Förderketten (24) und im Bereich der Querstege (28) eine Aussparung zum Hindurchführen der Querstege (28) aufweist.

4. Laderaum nach einem der vorhergehenden Ansprüche, **dadurch gekennzeichnet, dass** die Querstege (28) ein U-förmiges Profil oder einen rechteckigen, trapezförmigen oder einen dreieckigen Querschnitt aufweisen und in regelmäßigen Abständen zueinander angeordnet sind.

5. Laderaum nach einem den vorhergehenden Ansprüche **dadurch gekennzeichnet, dass** die Stirnwand (18) entlang einer Längsachse des Laderaumes (12) zur Vorverdichtung und/oder Entladung des Ladeguts bewegbar und über umlaufende Zugmittel antreibbar ist, wobei die Mehrzahl von Querstegen (28), die sich quer zur Längsrichtung des Laderaumes (12) hin erstrecken mit den Zugmitteln verbindbar sind.

6. Laderaum nach Anspruch 5, **dadurch gekennzeichnet, dass** die umlaufenden Zugmittel und/oder die Querstege (28) lösbar auf dem Boden (14) des Laderaumes (12) anbringbar sind, wobei die Zugmittel über einen Motor bewegbar sind.

7. Laderaum nach einem der Ansprüche 5 oder 6, **dadurch gekennzeichnet, dass** oben laufende Stränge der umlaufenden Zugmittel oberhalb des Bodens (14) des Laderaumes (12) und unten laufende Stränge der umlaufenden Zugmittel in einem Aufbaurahmen des Laderaumes (12) verlaufen.

8. Laderaum nach einem der Ansprüche 5 bis 7,
**dadurch gekennzeichnet, dass** die Querstege (28) ein im Wesentlichen U-förmiges Profil oder aber auch einen im Wesentlichen rechteck- oder trapezförmigen Querschnitt aufweisen und an ihrer Unterseite, welche dem Boden (14) des Laderaumes (12) angrenzt, im Wesentlichen abgeflacht ausgebildet sind.

9. Laderaum nach einem der Ansprüche 5 bis 7, **dadurch gekennzeichnet, dass** die Querstege (28) einen dreieckförmigen Querschnitt aufweisen.

10. Laderaum nach einem der Ansprüche 5 bis 9, **dadurch gekennzeichnet, dass** die Querstege (28) an ihrer dem Boden (14) des Laderaumes (12) angrenzenden Unterseite wenigstens eine Rolle oder einen Stützbalken aufweisen.

11. Laderaum nach einem der Ansprüche 5 bis 10, **dadurch gekennzeichnet, dass** die Förderketten (24) über Umlenkrollen (26) im Bereich der Entladeseite (16) und der dieser gegenüberliegenden Seite des Bodens (12) des Laderaumes (14) führbar sind, wobei die Förderketten (24) über mindestens eine der Umlenkrollen (26) antreibbar sind.

12. Laderaum nach einem der Ansprüche 5 bis 11, **dadurch gekennzeichnet, dass** die Stirnwand (18) die gesamte Breite und/oder Höhe des Laderaum-Querschnitts ausfüllt, wobei die Seitenwände (20) des Laderaumes (12) an ihrer Innenwand jeweils eine Führungsschiene (30) aufweisen, in welche die Stirnwand (18) über korrespondierende Aussparungen (32) eingreift und bei Bewegung der Stirnwand (18) in Fahrtrichtung bzw. in Fahrtgegenrichtung über die Führungsschienen (30) gleitet.

13. Transportwagen mit einem Laderaum (12), einer Entladeseite (16) und einer Laderaumvorrichtung (20) nach einem der Ansprüche 1 bis 2

14. Transportwagen nach Anspruch 13, **dadurch gekennzeichnet, dass** ein unten laufender Strang des Zugmittels im Fahrzeugrahmen des Transportwagens (10) verläuft.

## Claims

1. A loading space having a loading space apparatus for loading and unloading goods in transit into and out of a loading space (12) of a vehicle, in particular of a transport cart (10), wherein the loading space (12) has steep sidewalls (20) and a substantially flat base (14) as well as an unloading opening for unloading the load and an end wall (18), wherein the loading space apparatus (20) has circumferential pulling means releasably connected to the base (14) of the loading space (12) for driving the side wall (18), wherein the pulling means have at least two finite conveyer chains (24) which extend in parallel with one another and a plurality of cross-webs (28) which extend transversely toward the longitudinal direction of the loading space,
**characterised in that** the cross-webs (28) can be attached and releasably connected between two oppositely disposed conveyer chains (24), with the cross-webs (28) being able to be fastened to the chain links and with the length of the cross-webs (28) corresponding to a third or to a quarter of the width of the base (14).

2. A loading space in accordance with claim 1, **characterised in that** the pulling means have four conveyer chains (24) which extend in parallel with one another, which are arranged in pairs and of which two are inwardly disposed and two are outwardly disposed, with the cross-webs (28) being able to be connected to the inwardly disposed conveyer chains (24) and with the outwardly disposed conveyer chains serving the driving of the end wall (18), with the pulling means preferably being movable via a motor and with the pulling means advantageously being arranged in the centre of the base (14) of the loading space (12).

3. A loading space in accordance with one of the claims 1 or 2, **characterised in that** the cross-webs (28) are arranged in a lowered position with respect to the conveyer chains (24) extending in parallel, with the cross-webs (28) having at least one support bar or a roller at their lower sides which slides over the base (14) of the loading space (12), with advantageously the end wall (18) of the loading space (12) having openings for guiding the conveyer chains (24) and having a cut-out for leading through the cross-webs (28) in the region of the cross-webs (28).

4. A loading space in accordance with one of the preceding claims, **characterised in that** the cross-webs (28) have a U-shaped section or a rectangular, trapezoidal or triangular cross-section and are arranged at regular intervals to one another.

5. A loading space in accordance with one of the preceding claims, **characterised in that** the end wall (18) is movable along a longitudinal axis of the loading space (12) for precompacting and/or unloading of the load and is drivable via circumferential pulling means, with the plurality of cross-webs (28) which extend transversely to the longitudinal direction of the loading space (12) being connectable to the pulling means.

6. A loading space in accordance with claim 5, **characterised in that** the circumferential pulling means and/or the cross-webs (28) can be releasably attached on the base (14) of the loading space (12), with the pulling means being movable via a motor.

7. A loading space in accordance with one of the claims 5 or 6, **characterised in that** upwardly running strands of the circumferential pulling means extend above the base (14) of the loading space (12) and downwardly running strands of the circumferential pulling means extend in a superstructure frame of the loading space (12).

8. A loading space in accordance with one of the claims 5 to 7, **characterised in that** the cross-webs (28) have a substantially U-shaped section or also a substantially rectangular or trapezoidal cross-section and are configured as substantially flat at their lower side which is adjacent to the base (14) of the loading space (12).

9. A loading space in accordance with one of the claims 5 to 7, **characterised in that** the cross-webs (28) have a triangular cross-section.

10. A loading space in accordance with one of the claims 5 to 9, **characterised in that** the cross-webs (28) have at least one roller or one support bar at their lower side adjacent to the base (14) of the loading space (12).

11. A loading space in accordance with one of the claims 5 to 10, **characterised in that** the conveyer chains (24) can be guided via deflection rollers (26) in the region of the unloading side (16) and of the side of the base (12) of the loading space (14) disposed opposite it, with the conveyer chains (24) being drivable via at least one of the deflection rollers (26).

12. A loading space in accordance with one of the claims 5 to 11, **characterised in that** the end wall (18) fills up the total width and/or height of the loading space cross-section, with the sidewalls (20) of the loading space (12) each having a guide rail (30) at their inner wall into which guide rail the end wall (18) engages via corresponding cut-outs (32) and slides in the direction of travel or in the opposite direction to travel over the guide rails (30) on a movement of the end wall (18).

13. A transport cart having a loading space (12), an unloading side (16) and a loading space apparatus (20) in accordance with one of the claims 1 to 12.

14. A transport cart in accordance with claim 13, **characterised in that** a downwardly running strand of the pulling means extends in the vehicle frame of the transport cart (10).

## Revendications

1. Espace de rangement comprenant un dispositif d'espace de rangement pour le chargement et le déchargement de marchandises à transporter dans et hors d'un espace de rangement (12) d'un véhicule, notamment d'un véhicule de transport (10), l'espace de rangement (12) présentant des parois latérales (20) abruptes et un fond (14) essentiellement plat ainsi qu'une ouverture de déchargement pour décharger le chargement ainsi qu'une paroi frontale (18), le dispositif d'espace de rangement (20) présentant des moyens de traction tournants reliés de manière détachable au fond (14) de l'espace de rangement (12) pour l'entraînement de la paroi frontale (18), les moyens de traction présentant au moins deux chaînes de manutention (24) à bout libre s'étendant parallèlement l'une à l'autre et une pluralité d'entretoises (28) qui s'étendent transversalement à la direction longitudinale de l'espace de rangement,
**caractérisé en ce que** les entretoises (28) peuvent être montées et reliées de manière détachable entre deux chaînes de manutention (24) opposées, les entretoises (28) pouvant être fixées aux maillons de chaîne, la longueur des entretoises (28) correspondant à un tiers ou un quart de la largeur du fond (14).

2. Espace de rangement selon la revendication 1, **caractérisé en ce que** les moyens de traction présentent quatre chaînes de manutention (24) agencées par paires s'étendant parallèlement les unes aux autres, dont deux sont intérieures et deux sont extérieures, les entretoises (28) pouvant être reliées aux chaînes de manutention (24) intérieures et les chaînes de manutention extérieures servant à l'entraînement de la paroi frontale (18), les moyens de traction étant mobiles de préférence par l'intermédiaire d'un moteur, et les moyens de traction étant agencés de manière avantageuse au milieu du fond (14) de l'espace de rangement (12).

3. Espace de rangement selon l'une des revendications 1 ou 2, **caractérisé en ce que** les entretoises (28) sont montées dans une position abaissée par rapport aux chaînes de manutention (24) s'étendant parallèlement, les entretoises (28) présentant sur leur face inférieure au moins une poutre de support ou un rouleau qui glisse sur le fond (14) de l'espace de rangement (12), la paroi frontale (18) de l'espace de rangement (12) présentant de manière avantageuse des ouvertures pour guider les chaînes de manutention (24) et un évidement dans la zone des entretoises (28) pour y faire passer les entretoises (28).

4. Espace de rangement selon l'une des revendications précédentes, **caractérisé en ce que** les entretoises (28) présentent un profil en U ou une coupe rectangulaire, trapézoïdale ou triangulaire et sont agencées à intervalles réguliers les unes des autres.

5. Espace de rangement selon l'une des revendications précédentes, **caractérisé en ce que** la paroi frontale (18) est mobile le long d'un axe longitudinal de l'espace de rangement (12) pour le précompactage et/ou le déchargement du chargement et peut être entraînée par des moyens de traction tournants, les plusieurs entretoises (28) qui s'étendent transversalement à la direction longitudinale de l'espace de rangement (12) pouvant être reliées aux moyens de traction.

6. Espace de rangement selon la revendication 5, **caractérisé en ce que** les moyens de traction tournants et/ou les entretoises (28) peuvent être montés de manière détachable sur le fond (14) de l'espace de rangement (12), les moyens de traction pouvant être déplacés par l'intermédiaire d'un moteur.

7. Espace de rangement selon l'une des revendications 5 ou 6, **caractérisé en ce que** des branches passant en haut des moyens de traction tournants s'étendent au-dessus du fond (14) de l'espace de rangement (12) et des branches passant en bas des moyens de traction tournants s'étendent dans un châssis de l'espace de rangement (12).

8. Espace de rangement selon l'une des revendications 5 à 7, **caractérisé en ce que** les entretoises (28) présentent un profil essentiellement en forme de U ou bien une coupe essentiellement rectangulaire ou trapézoïdale et sont réalisées essentiellement aplaties sur leur face inférieure qui est adjacente au fond (14) de l'espace de rangement (12).

9. Espace de rangement selon l'une des revendications 5 à 7, **caractérisé en ce que** les entretoises (28) présentent une coupe triangulaire.

10. Espace de rangement selon l'une des revendications 5 à 9, **caractérisé en ce que** les entretoises (28) présentent au moins un rouleau ou une poutre de support sur leur face inférieure adjacente au fond (14) de l'espace de rangement (12).

11. Espace de rangement selon l'une des revendications 5 à 10, **caractérisé en ce que** les chaînes de manutention (24) peuvent être guidées via des poulies de renvoi (26) dans la zone du côté déchargement (16) et du côté du fond (12) de l'espace de rangement (14) opposé à celui-ci, les chaînes de manutention (24) pouvant être entraînées par au moins l'une des poulies de renvoi (26).

12. Espace de rangement selon l'une des revendications 5 à 11, **caractérisé en ce que** la paroi frontale (18) remplit toute la largeur et/ou la hauteur de la coupe de l'espace de rangement, les parois latérales (20) de l'espace de rangement (12) présentant sur leur paroi intérieure respectivement un rail de guidage (30) dans lequel la paroi frontale (18) s'engage par le biais d'évidements correspondants (32) et lors d'un déplacement de la paroi frontale (18) dans le sens de la marche ou dans le sens inverse à la marche glisse sur les rails de guidage (30).

13. Véhicule de transport comprenant un espace de rangement (12), un côté déchargement (16) et un dispositif d'espace de rangement (20) selon l'une des revendications 1 à 12.

14. Véhicule de transport selon la revendication 13, **caractérisé en ce qu'**une branche passant en bas du moyen de traction s'étend dans le châssis du véhicule de transport (10).
